# EUROPEAN PATENT APPLICATION

(11) **EP 4 478 470 A1**
(43) Date of publication of application: **18.12.2024**
(21) Application number: 23857602.9
(22) Date of filing: 03.08.2023
(51) Int. Cl.: H01M 10/0567, H01M 10/0569, H01M 10/052, H01M 4/38, H01M 4/62, H01M 4/13

(54) **ELECTROLYTE FOR LITHIUM-SULFUR SECONDARY BATTERY AND LITHIUM-SULFUR SECONDARY BATTERY COMPRISING SAME**

(30) Priority: 26.08.2022 KR 20220107417
(71) Applicant: LG Energy Solution, Ltd., Seoul 07335 (KR); LG Chem, Ltd., Yeongdeungpo-gu Seoul 07336 (KR); LG Management Development Institute, Seoul 07336 (KR)
(72) Inventor: PARK, Seonghyo, Daejeon 34122 (KR); JEON, Hyelim, Daejeon 34122 (KR); CHA, Sunyoung, Daejeon 34122 (KR); LEE, Boram, Daejeon 34122 (KR); LEE, Changhoon, Daejeon 34122 (KR); YOO, Solji, Daejeon 34122 (KR); JANG, Eunji, Daejeon 34122 (KR); HAN, Kyeong Hwan, Daejeon 34122 (KR); KWACK, Hobeom, Daejeon 34122 (KR); HAN, Sehui, Seoul 07336 (KR); PARK, Changyoung, Seoul 07336 (KR); LEE, Jaewan, Seoul 07336 (KR)
(74) Representative: Goddar, Heinz J.
(86) International application number: PCT/KR2023/011379
(87) International publication number: WO 2024/043567

(57) **Abstract**

The present disclosure relates to an electrolyte for lithium-sulfur secondary battery that can improve output power characteristics of lithium-sulfur secondary batteries and a lithium-sulfur secondary battery comprising the same. The electrolyte for lithium-sulfur secondary battery includes a lithium salt, a non-aqueous solvent and an additive, wherein a first mixing energy(Gmix1) of the electrolyte and dilithio peroctasulfide (Li₂S₈) and a second mixing energy(Gmix2) of the electrolyte and lithium sulfide (Li₂S) each have a certain range.

## Description

### [TECHNICAL FIELD]

### Cross Citation with Related Application(s)

This application claims the benefit of Korean Patent Application No. 10-2022-0107417 filed on August 26, 2022 with the Korean Intellectual Property Office, the disclosure of which is incorporated herein by reference in its entirety.

The present disclosure relates to an electrolyte for lithium-sulfur secondary battery that can improve output power characteristics of lithium-sulfur secondary batteries, and a lithium-sulfur secondary battery comprising the same.

### [BACKGROUND]

As the utilization range of secondary batteries is expanded to electric vehicles (EV), energy storage systems(ESS) or the like, lithium-ion secondary batteries having a relatively low energy storage density relative to weight are gradually reaching their limits. In recent years, interest in various next-generation secondary batteries with high energy density has increased, and among these, research and development on lithium-sulfur secondary batteries, which theoretically have a high energy storage density relative to weight, are becoming active.

Generally, such a lithium-sulfur secondary battery refers to a chargeable/dischargeable battery system that includes a sulfur molecule (e.g., S₈) having an S-S bond (Sulfur-Sulfur Bond), or a sulfur-containing composite or the like as a cathode active material, and includes metallic lithium or the like as an anode active material. Such lithium-sulfur secondary batteries have abundant reserves around the world, and can be manufactured at a relatively low cost by using sulfur having a small weight relative to metal as a cathode active material, which makes it possible to implement a secondary battery having a very high energy density relative to weight.

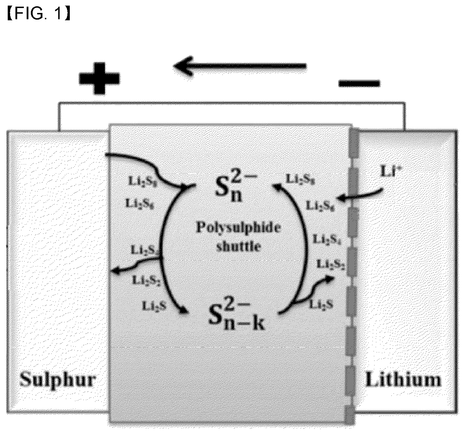

As shown in FIG. 1, in the discharging process of the lithium-sulfur secondary battery, a continuous reduction reaction of sulfur (e.g., S₈) contained in the cathode and a continuous oxidation reaction of metallic lithium contained in the anode occur within each electrode and electrolyte. While such continuous oxidation/reduction reactions occur, multiple types of lithium polysulfides (LiPS) are formed within the electrolyte and can move between electrodes. The final formed solid-state lithium sulfide (Li₂S) may be deposited on the anode. For example, the reaction process of lithium polysulfide and lithium sulfide by the continuous reduction reaction of sulfur can be summarized as S₈ → Li₂S₈ → Li₂S₆ → Li₂S₄ → Li₂S₂ → Li₂S, among which S₈, Li₂S₂ and Li₂S can have a solid state, and the remaining lithium polysulfide (Li₂Sₙ; n is 4, 6 or 8) may have a liquid state dissolved in the electrolyte.

However, in the process of sequential and continuous conversion of sulfur, lithium polysulfide and lithium sulfide of which phases are different from each other, this conversion process is not smooth and is not performed quickly, so that lithium-sulfur secondary batteries have low output power characteristics compared to existing lithium-ion secondary batteries. Furthermore, in the process of forming lithium polysulfide by the continuous oxidation/reduction reaction, some of the lithium polysulfide dissolved in the electrolyte may cause side reactions or the like with the anode, which may be one factor that reduces the life characteristics of the lithium-sulfur secondary battery.

Such low output power characteristics, and life characteristics are major factors that make it difficult to apply lithium-sulfur secondary batteries, and as a result, there is a need for continuous development of lithium-sulfur secondary batteries having improved output power characteristics.

### [DETAILED DESCRIPTION OF THE INVENTION]

### [Technical Problem]

It is an object of the present disclosure to provide an electrolyte for lithium-sulfur secondary batteries that can smoothly perform the continuous conversion process from sulfur contained in the cathode to lithium polysulfide and lithium sulfide, and thus can improve output power characteristics of lithium-sulfur secondary batteries.

It is another object of the present disclosure to provide a lithium-sulfur secondary battery that comprises the above-mentioned electrolyte, thereby having improved output power characteristics, and the like.

### [Technical Solution]

According to one aspect of the present disclosure, there is provided an electrolyte for lithium-sulfur secondary battery comprising a lithium salt, a non-aqueous solvent and an additive,
wherein a first mixing energy(Gmix1) of the electrolyte and dilithio peroctasulfide (Li₂S₈) is -1.0 kcal/mol or less, and a second mixing energy(Gmix2) of the electrolyte and lithium sulfide (Li₂S) is 4.0 kcal/mol or more, which are calculated at room temperature (20±5°C) in accordance of the theory of COSMO-RS (Conductor like Screening Model for real Solvent).

According to another aspect of the present disclosure, there is provided a lithium-sulfur secondary battery comprising: a cathode containing sulfur as a cathode active material; an anode containing metallic lithium; a separator interposed between the cathode and the anode; and the electrolyte.

### [Advantageous Effects]

The electrolyte of the present disclosure has optimized solubility for dilithio peroctasulfide (Li₂S₈) and lithium sulfide (Li₂S) even among lithium polysulfide and lithium sulfide generated during the charging/discharging process of a lithium-sulfur secondary battery, and has a constant mixing energy at the time of mixing them.

It was confirmed that by applying such an electrolyte, the lithium-sulfur secondary battery can smoothly and quickly perform a continuous reduction and conversion process of sulfur (e.g. Ss), lithium polysulfide and lithium sulfide during its discharge process. As a result, it was confirmed that the lithium-sulfur secondary battery exhibit improved output power characteristics compared to previously known batteries of the same type, particularly, improved output power characteristics in the state of charge (SOC) range of 70 to 80%, where conventional batteries was the lowest in output power characteristics.

In addition, the lithium-sulfur secondary battery can smoothly perform the conversion process of the lithium polysulfide and lithium sulfide, thereby reducing side reactions or the like between the lithium polysulfide and the anode, which can also contribute to improving the life characteristics of the lithium-sulfur secondary battery.

Therefore, the present disclosure can contribute to improving the output power and life characteristics, which have been the biggest obstacles to the commercialization of lithium-sulfur secondary batteries.

### [BRIEF DESCRIPTION OF THE DRAWINGS]

FIG. 1 is a schematic diagram showing that multiple types of lithium polysulfides are formed in the electrolyte through oxidation and reduction reactions during the charging/discharging process of a lithium-sulfur secondary battery;
FIG. 2 is a graph showing the pattern of change in cell voltage and specific capacity of the lithium-sulfur secondary battery as multiple types of lithium polysulfide (Li₂Sₙ; n is 2, 4, 6 or 8) are formed in the electrolyte through oxidation and reduction reactions during the charging/discharging process of a lithium-sulfur secondary battery;
FIG. 3 is a graph showing the maximum power (kW/kg) according to the state of charge (SOC; %) of lithium-sulfur batteries manufactured using the electrolytes of Examples 1 to 4 and Comparative Examples 1 and 2; and
FIG. 4 is a graph showing the maximum power (kW/kg) according to the state of charge (SOC; %) of lithium-sulfur batteries manufactured using the electrolytes of Examples 5 to 8.

### [DETAILED DESCRIPTION OF THE EMBODIMENTS]

Now, an electrolyte according to a specific embodiment of the disclosure and a lithium-sulfur secondary battery comprising the same will be described in detail with reference to the accompanying drawings.

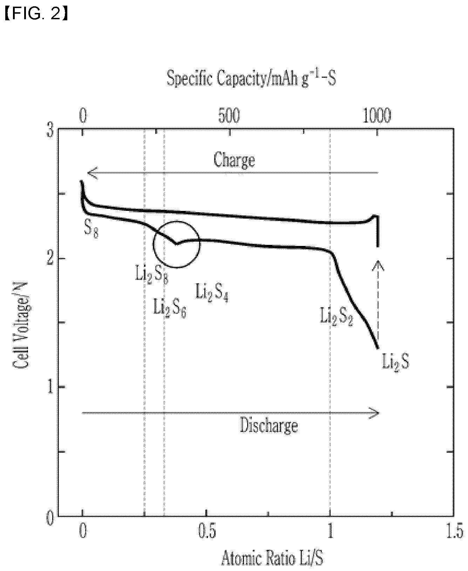

FIG. 1 is a schematic diagram showing that multiple types of lithium polysulfides are formed in the electrolyte through oxidation and reduction reactions during the charging/discharging process of a lithium-sulfur secondary battery. FIG. 2 is a graph showing the pattern of changes in cell voltage and specific capacity of the lithium-sulfur secondary battery as multiple types of lithium polysulfide (Li₂Sₙ; n is 2, 4, 6 or 8) are formed in the electrolyte through oxidation and reduction reactions during the charging/discharging process of a lithium-sulfur secondary battery.

According to one embodiment of the present disclosure, there is provided an electrolyte for lithium-sulfur secondary battery comprising a lithium salt, a non-aqueous solvent and an additive,

wherein a first mixing energy(Gmix1) of the electrolyte and dilithio peroctasulfide (Li₂S₈) is -1.0 kcal/mol or less, and a second mixing energy(Gmix2) of the electrolyte and lithium sulfide (Li₂S) is 4.0 kcal/mol or more, which are calculated at room temperature (20±5°C) in accordance of the theory of COSMO-RS (Conductor like Screening Model for real Solvent).

The present inventors continued research about the characteristics of a lithium-sulfur secondary battery in order to develop an electrolyte that can improve the output power characteristics, and the like. In particular, the present inventors focused on the point that as the phase change process of solid (S₈) → liquid (Li₂Sₙ; n is 4, 6 or 8) → solid (Li₂S₂ and Li₂S) is inevitably involved, during a continuous reduction/conversion process of Sa → Li₂S₈ → Li₂S₆ → Li₂S₄ → Li₂S₂ → Li₂S that occur during the discharging process of a lithium-sulfur secondary battery, it is difficult to smoothly perform the continuous conversion process to lithium polysulfide and lithium sulfide.

In this regard, the present inventors measured the pattern of change in cell voltage during the discharging process of the lithium-sulfur secondary battery as shown in FIG. 2. As a result of such measurements, it was confirmed that different discharge voltages appeared at each stage due to the continuous reduction/conversion process to the multiple types of lithium polysulfide and lithium sulfide. Among these, it was confirmed that overvoltage was applied in the circular display section in FIG. 2, resulting in a decrease in output power characteristics. This section corresponds to the section corresponding to a state of charge (SOC) 70-80% of a secondary battery.

The circular display section can be predicted to be the section in which the reduction/conversion of solid-state sulfur (S₈, etc.) to liquid-state Li₂S₈ is performed, while the conversion and production of solid-state Li₂S₂ and Li₂S from Li₂S₈ begins through lithium polysulfide such as Li₂S₆ and Li₂S₄. Therefore, it can be predicted that as the phase change process is not smooth and overvoltage is applied, the output power characteristics of the lithium-sulfur secondary battery will decrease.

Based on such predictions, the present inventors have completed an electrolyte of one embodiment in which the solubility for dilithio peroctasulfide (Li₂S₈) and lithium sulfide (Li₂S) and the mixing energy at the time of mixing them are optimized, among the multiple types of lithium polysulfide and lithium sulfide produced during the charging/discharging process of a lithium-sulfur secondary battery.

For reference, the first and second mixing energies refer to solvation free energies when mixing the electrolyte and Li₂S₈ or Li₂S, and can be calculated based on quantum mechanical calculations by the COSMO-RS theory on the basis of the structural information of each molecule (see, for example, "COSMO-RS: From Quantum Chemistry to Fluid Phase Thermodynamics and Drug Design", A. Klamt, Elsevier; Amsterdam, The Netherlands, 2005, and Korean Unexamined Patent Publication No. 2019-0011963). In more specific embodiments, the first and second mixing energies can be calculated using commercially available COSMOtherm software (COSMOlogic GmbH & Co. KG) that performs quantum mechanical calculations by the COSMO-RS theory.

Such first and second mixing energies may reflect the solubilities of the electrolyte of one embodiment and Li₂S₆ or Li₂S. As the electrolyte of one embodiment satisfies a certain composition or the like described below, the first mixing energy at the time of mixing with Li₂S₈ is lower (i.e., the solubility is higher), and Li₂S can exhibit the characteristics that the second mixing energy is high (i.e., the solubility is low).

As the electrolyte of one embodiment is applied to a lithium-sulfur secondary battery, the reduction/conversion process can be performed quickly and smoothly due to the low mixing energy and high solubility of Li₂S₈. In addition, due to the high mixing energy and low solubility of Li₂S, the conversion from lithium polysulfide containing Li₂S₈ to solid-state Li₂S₂ and Li₂S can be achieved very smoothly.

As a result, it was confirmed that in the discharging process of the lithium-sulfur secondary battery, the continuous reduction and conversion processes of sulfur (e.g. Ss), lithium polysulfide and lithium sulfide can be performed smoothly and quickly, and the lithium-sulfur secondary battery containing the electrolyte of one embodiment may exhibit improved output power characteristics than those previously known, in particular, improved output power characteristics in the SOC section of 70-80%, where the output power characteristics of existing batteries were low.

In addition, in the lithium-sulfur secondary battery, the conversion process of the lithium polysulfide and lithium sulfide can be smoothly performed, thereby reducing side reactions between the lithium polysulfide and the anode, which can also contribute to improving the life characteristics of the lithium-sulfur secondary battery.

In the electrolyte of one embodiment described above, the first mixing energy (Gmix1) may be -2.50 kcal/mol to -1.05 kcal/mol, or -2.00 kcal/mol to -1.10 kcal/mol, and the second mixing energy (Gmix2) may be 5.50 kcal/mol to 9.00 kcal/mol, or 6.20 kcal/mol to 8.80 kcal/mol.

If the first mixing energy becomes too high or the second mixing energy becomes too low, the conversion process between lithium polysulfide and lithium sulfide may not proceed smoothly, which may deteriorate the output power characteristics of the lithium-sulfur secondary battery. Conversely, if the first mixing energy is too low or the second mixing energy is too high, the stability of the electrolyte of the one embodiment may be reduced, and as a result, the life characteristics of the lithium-sulfur secondary battery may be reduced.

Further, the electrolyte of one embodiment can exhibit optimized mixing energy and solubility for the residual lithium polysulfide (Li₂Sₙ; n is 2, 4 or 6) that is further produced during the discharging process of the lithium-sulfur secondary battery. As a result, the continuous reduction/conversion process of the discharging process is performed smoothly, and the output power characteristics of secondary batteries are further improved, while side reactions between lithium polysulfide and the anode can be suppressed, thereby improving the life characteristics of the secondary battery.

For example, the mixing energy of the electrolyte and Li₂S₂ may be 1.5 kcal/mol or more and may have a value that is smaller than the second mixing energy (Gmix2) by 2.5 kcal/mol or more. In a specific example, the mixing energy may be 2.00 kcal/mol to 6.50 kcal/mol, or 3.00 kcal/mol to 5.00 kcal/mol.

Further, the mixing energy of the electrolyte and Li₂S₄ or Li₂S₆ has a value that is larger than the first mixing energy (Gmix1) by 0.05 kcal/mol or more, and may be 0.01 kcal/mol or less. In a more specific example, the mixing energy of the electrolyte and Li₂S₄ may be -1.50 kcal/mol to 0.01 kcal/mol, or -0.90 kcal/mol to 0.01 kcal/mol, and the mixing energy of the electrolyte and Li₂S₆ may be -2.40 kcal/mol to -0.90 kcal/mol, or -2.00 kcal/mol to -1.00 kcal/mol.

On the other hand, the electrolyte of one embodiment basically includes a lithium salt, a non-aqueous solvent and an additive, and particularly includes a certain solvent composition as a non-aqueous solvent, and controls the concentration/content of the lithium salt and other additives to a certain range, thereby capable of satisfying the above-mentioned mixing energies of the lithium polysulfide and lithium sulfide.

First, in order for the electrolyte to satisfy the above-mentioned mixing energy range, the non-aqueous solvent includes a furan-based compound or a tetrahydrofuran-based compound and a chain ether-based compound in a volume ratio (v/v) of 1:1 to 1:5, or 1:1.04 to 1:4.50, and may not contain a dioxolane-based compound.

In a more specific example, the non-aqueous solvent may include 15 to 50% by volume, or 20 to 49% by volume of one or more of the furan-based compound or tetrahydrofuran-based compound, and 50 to 85% by volume, or 51 to 80% by volume, of one or more of the chain ether-based compound, and may not contain additional solvents such as the dioxolane-based compound.

At this time, the furan-based compound or tetrahydrofuran-based compound and the chain ether-based compound can respectively function as a solvent and a non-solvent each having different solubilities for the lithium polysulfide. Therefore, as such solvents and non-solvents are contained in optimal proportions, the above-mentioned first and second mixing energies are satisfied, so that the output power characteristics of the lithium-sulfur battery can be further improved.

However, if the content of the furan-based compound or tetrahydrofuran-based compound becomes too large, or if a solvent such as the dioxolane-based compound is included, the first mixing energy of the electrolyte may become large or the second mixing energy may become small, whereby the output power characteristics of the lithium-sulfur secondary battery may not be properly improved. Conversely, when the content of the furan-based compound or tetrahydrofuran-based compound becomes too small, the formation of a protective film due to the reaction between the solvent and the metallic lithium of the anode is not sufficient, the life characteristics of the lithium-sulfur secondary battery may not be sufficient.

This is because the furan-based compound or tetrahydrofuran-based compound forms a SEI layer (solid electrolyte interface) on the surface of the metallic lithium, thereby suppressing the formation of lithium dendrites, and can suppress electrolyte decomposition on the surface of the metallic lithium of the anode.

In the composition of the non-aqueous solvent described above, the furan-based compound or tetrahydrofuran-based compound may be a furan-based compound or a tetrahydrofuran-based compound in which an alkyl group having 1 to 4 carbon atoms is substituted or unsubstituted, and specific examples thereof include at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2-methyl tetrahydrofuran and 4-methyl tetrahydrofuran.

Among these, in consideration of the satisfaction of the first and second mixing energies described above, and the like, 2-methylfuran, 2-methyl tetrahydrofuran, or 4-methyl tetrahydrofuran, or a combination of two or more selected from them, can be preferably used. For example, the 2-methylfuran and 2-methyl tetrahydrofuran or 4-methyl tetrahydrofuran can be combined. In this case, 2-methylfuran : 2-methyl tetrahydrofuran or 4-methyl tetrahydrofuran can be mixed in a volume ratio of 30:1 to 1:30.

Further, as the chain ether-based compound, a compound in which two or more of alkyl groups or alkylene glycol groups having 1 to 10 carbon atoms, or 1 to 5 carbon atoms are bonded to an alkyl group having 1 to 5 carbon atoms via an ether bond (-O-) can be used. Specific examples thereof include at least one selected from the group consisting of dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether.

Among these, in consideration of the satisfaction of the first and seconnd mixing energies mentioned above, and the like, dimethoxyethane, diethylene glycol dimethyl ether or triethylene glycol dimethyl ether, or a combination of two or more selected from among them can be preferably used. For example, the dimethoxyethane and ethylene glycol dimethyl ether or triethylene glycol dimethyl ether may be combined. In this case, dimethoxyethane : ethylene glycol dimethyl ether or triethylene glycol dimethyl ether may be mixed in a volume ratio of 10:1 to 1:10, or 5:1 to 1:1.

Meanwhile, the lithium salt is an electrolyte salt used to increase ionic conductivity, and can be used without limitation as long as it is commonly used in the art. Specific examples of such lithium salts include at least one selected from the group consisting of LiCl, LiBr, Lil, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi and (CF₃SO₂)₃CLi. However, in consideration of the electrical conductivity of the lithium-sulfur battery or the above-mentioned satisfaction of the mixing energy, lithium salts in the form of sulfonates, such as CH₃SO₃Li, CF₃SO₃Li, (CF₃SO₂)₂NLi, (C₂F₅SO₂)₂NLi, (SO₂F)₂NLi or (CF₃SO₂)₃CLi can be used appropriately.

The lithium salt may be contained in the electrolyte at a concentration of 0.2 to 0.8 mol%, or 0.23 to 0.75 mol%, or 0.25 to 0.70 mol%, so that the above-mentioned electrolyte can appropriately satisfy the first and second mixing energies. If the concentration of lithium salt is too low, the electrical conductivity of the lithium-sulfur secondary battery may not be sufficient, and if the concentration of lithium salt is too high, the second mixing energy decreases or the first mixing energy increases, so that the output power characteristics of the lithium-sulfur secondary battery may not be sufficient.

On the other hand, the electrolyte of the above-mentioned embodiment further includes an additive for improving the characteristics of the lithium-sulfur secondary battery in addition to the non-aqueous solvent and lithium salt. Examples of such additives include at least one selected from the group consisting of lithium nitrate (LiNOs), potassium nitrate (KNOs), cesium nitrate (CsNOs), magnesium nitrate (Mg(NO₃)₂), barium nitrate (Ba(NO₃)₂), lithium nitrite (LiNO₂), potassium nitrite (KNO₂) and cesium nitrite (CsNO₂), among which lithium nitrate can be preferably used.

Further, the additive may be contained in the electrolyte in an amount of 0.8 to 4.0% by weight, 0.9 to 3.5% by weight, 0.8 to 3.0% by weight, or 0.9 to 2.0% by weight. If the content of the additive is too low, the characteristics of the lithium-sulfur secondary battery may not be sufficient, and if the content of the additive is too high, the first or second mixing energy of the electrolyte does not satisfy the above-mentioned range, which may make it difficult to realize the output power characteristics of the lithium-sulfur secondary battery.

As mentioned above, the electrolyte of one embodiment includes a lithium salt and an additive in a certain content range along with a non-aqueous solvent of a specific composition, thereby satisfying the first and second mixing energies mentioned above, and exhibiting optimized solubility for lithium polysulfide and lithium sulfide formed during discharge of a lithium-sulfur secondary battery. As a result, the lithium polysulfide and lithium sulfide can be smoothly generated during discharging of a lithium-sulfur secondary battery, and the application of overvoltage during this generation process can be reduced. As a result, the output power characteristics of the lithium-sulfur secondary battery can be improved.

In particular, such lithium-sulfur secondary batteries may exhibit improved output power characteristic, for example, output power characteristic of 1.2 kW/kg or more, 1.3 kW/kg or more, or 1.3 to 3.0 kW/kg, in the SOC 70-80% range, where overvoltage was applied to the existing battery and the output power characteristic was particularly low.

Thus, according to another embodiment of the invention, there is provided a lithium-sulfur secondary battery comprising: a cathode containing sulfur as a cathode active material; an anode containing metallic lithium; a separator interposed between the cathode and the anode; and the electrolyte of one embodiment. This lithium-sulfur secondary battery includes the electrolyte of one embodiment and thus can exhibit improved output power and life characteristics.

In the secondary battery of the other embodiment, the cathode may include a cathode active material and a binder, and may further include a conductive material. Further, the cathode may be one in which an active material layer containing a cathode active material, a binder, and the like is formed on a cathode current collector.

At this time, the cathode current collector supports the active material layer and is not particularly limited as long as it has high conductivity without causing chemical changes in the corresponding battery. For example, copper, stainless steel, aluminum, nickel, titanium, heat-treated carbon, or copper or stainless steel of which surface is treated with carbon, nickel, titanium, silver, or the like, an aluminum-cadmium alloy, or the like can be used.

Further, the cathode current collector may have fine protrusions and depressions formed on a surface thereof to enhance the bonding strength with an active material layer, and may be used in various forms such as a film, a sheet, a foil, a net, a porous body, a foaming body, a non-woven fabric, or the like.

The cathode active material may contain sulfur, and more specifically, elemental sulfur (S₈), an organic sulfur compound, a sulfur-carbon composite, a polymer ((C₂Sₓ)ₙ: x=2.5 to 50, n ≥ 2) or the like can be used as the cathode active material. The elemental sulfur (S₈) may be appropriately used in consideration of the characteristics of the electrolyte of one embodiment.

The cathode active material containing sulfur may be contained in an amount of 40 to 80 parts by weight, preferably 50 to 70 parts by weight, based on 100 parts by weight of the total weight of the cathode. If the content of the cathode active material is lowered, the energy density of the secondary battery may decrease, and if the content thereof is too large, the conductivity and stability of the electrode may decrease.

Further, the cathode may further include at least one additive selected from a transition metal element, a group IIIA element, a group IVA element, a sulfur compound of these elements, and an alloy of these elements and sulfur, in addition to the above-mentioned cathode active materials.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg, and the like, and the group IIIA element may comprise Al, Ga, In, Tl and the like, and the group IVA element may comprise Ge, Sn, Pb, and the like.

On the other hand, the binder is a component that assists in the binding between the active material and the current collector. For example, the binder may be at least one selected from the group consisting of polyvinylidene fluoride(PVdF), polyvinylidene fluoride-polyhexafluoropropylene copolymer(PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene(PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer(EPDM) rubber, sulfonated EPDM rubber, styrene-butylene rubber, fluororubber, carboxymethylcellulose(CMC), starch, hydroxypropylcellulose, regenerated cellulose, and a mixture thereof, but are not necessarily limited thereto.

The binder may typically be added in an amount of 1 to 15 parts by weight based on 100 parts by weight of the total weight of the cathode. If the content of the binder is less than 1 part by weight, the adhesive force between the active material layer and the current collector may be insufficient, and if the content of the binder exceeds 15 parts by weight, the adhesive force is improved, but the content of the cathode active material decreases accordingly, and the battery capacity may decrease.

On the other hand, the conductive material is a component for improving electrical conductivity, and is not particularly limited as long as it is an electronically conductive material that does not cause a chemical change in a secondary battery. For example, as the conductive material, carbon black, graphite, carbon fiber, carbon nanotube, a metal powder, a conductive metal oxide, an organic conductive material, etc. may be used, and currently commercially available products may include acetylene black series (products from Chevron Chemical Company, Gulf Oil Company, etc.), Ketjen Black EC series (products from Armak Company), Vulcan XC-72 (a product from Cabot Company), and Super P (a product from MMM Company), etc. For example, acetylene black, carbon black, graphite, etc. may be used.

Further, in the lithium-sulfur secondary battery of the other embodiments, a filler may be optionally added to the cathode as a component that suppresses expansion of the cathode active material containing sulfur. Such a filler is not particularly limited as long as it can suppress the expansion of the electrode without inducing chemical changes in the battery. For example, olefinic polymers such as polyethylene and polypropylene; fibrous materials such as glass fiber and carbon fiber; etc. can be used.

The cathode can be manufactured by dispersing and mixing a cathode active material, a conductive material, and a binder in a dispersion medium (solvent) to form a slurry, applying the slurry onto a cathode current collector, and then drying and rolling it. As the dispersion medium, NMP (N-methyl-2-pyrrolidone), DMF(dimethyl formamide), DMSO(dimethyl sulfoxide), ethanol, isopropanol, water, and mixtures thereof may be used, but is not limited thereto.

In the secondary battery of the other embodiments mentioned above, the anode may include metallic lithium, and for example, it may include a lithium metal or alloy layer formed on the anode current collector.

Such an anode current collector is not particularly limited as long as it has high conductivity without causing chemical changes in a battery, and may be selected from the group consisting of copper, aluminum, stainless steel, zinc, titanium, silver, palladium, nickel, iron, chromium, alloys thereof, and combinations thereof. The stainless steel may have its surface treated with carbon, nickel, titanium or silver, and aluminum-cadmium alloys may be used as the alloy, and in addition thereto, baked carbon, nonconductive polymers of which surface is treated with a conductor, conductive polymers or the like may also be used. As the anode current collector, a copper thin plate is generally used.

The metallic lithium may be lithium metal or an alloy. At this time, the lithium alloy includes elements that can be alloyed with lithium, and specifically, it may be an alloy of lithium and one or more metals selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al. The metallic lithium may be a sheet or foil, and in some cases, may have a form of depositing or coating lithium metal or lithium alloy on a current collector using a dry process, or may have a form of depositing or coating particulate metal and alloy using a wet process.

A conventional separator may be interposed between the cathode and the anode. The separator is a physical separator having the function of physically separating electrodes, and can be used without any particular restrictions as long as it is used as a normal separator, and it is particularly preferable that it has low resistance to ion movement in the electrolyte and excellent wettability to an electrolyte. Further, the separator separates or insulates the cathode and the anode from each other and enables the transport of lithium ions between the cathode and the anode. Such separator is porous and may be made of nonconductive or insulating materials. The separator may be an independent member such as a film, or may be a coating layer added to the cathode and/or anode.

As examples of a polyolefin-based porous membrane that can be used as the separator, membranes formed with a polymer using a polyolefin-based polymer such as high-density polyethylene, linear low-density polyethylene, low-density polyethylene, or ultra-high-molecular-weight polyethylene, polypropylene, polybutylene, polypentene alone, or a polymer mixing these may be used. As examples of a non-woven fabric that can be used as the separator, non-woven fabric formed with a polymer using polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester, and the like, alone, or a polymer mixing these may be used, and, as a fiber form forming a porous web, such non-woven fabric includes a spunbond or meltblown form formed with long fibers.

The thickness of the separator is not particularly limited, but is preferably in a range of 1 to 100 *µ*m, and more preferably in a range of 5 to 50 *µ*m. When the thickness of the separator is less than 1 *µ*m, mechanical properties may not be maintained, and when the thickness is greater than 100 *µ*m, the separator functions as a resistive layer to decline battery performance. A pore size and porosity of the separator are not particularly limited, but the pore size is preferably from 0.1 to 50 *µ*m, and the porosity is preferably from 10 to 95%. When the pore size of the separator is less than 0.1 *µ*m or the porosity is less than 10%, the separator functions as a resistive layer, and when the pore size is greater than 50 *µ*m or the porosity is greater than 95%, mechanical properties may not be maintained.

A lithium-sulfur secondary battery of another embodiment including the electrolyte, cathode, anode and separator as mentioned above can be manufactured through a process in which a cathode faces an anode, a separator is interposed therebetween, and then an electrolyte is injected.

On the other hand, the lithium secondary battery is not only applicable to a battery cell used as a power source of a small device but also particularly suitably usable as a unit cell of a battery module which is a power source of a medium and large-sized device. In this respect, a battery module in which at least two lithium secondary batteries are electrically connected (in series or in parallel) can be provided.

It is needless to say that the number of lithium secondary batteries comprised in the battery module may be variously adjusted in consideration of the use and capacity of the battery module. Furthermore, a battery pack in which the battery modules are electrically connected according to a conventional technique in the art can also be provided. The battery module and the battery pack may be used as a power source for at least one medium and large-sized device selected from power tools; electric cars comprising an electric vehicle (EV), a hybrid electric vehicle (HEV), and a plug-in hybrid electric vehicle (PHEV); electric trucks; electric commercial vehicles; or power storage systems, but the present disclosure is not limited thereto.

Hereinafter, preferred examples are presented in order to facilitate understanding of the present disclosure. However, it will be apparent to those skilled in the art that these examples are merely illustrative of the invention, various changes and modifications can be made within the scope and spirit of the invention, and such changes and modifications are intended to fall within the scope of the appended claims.

### Examples 1 to 8 and Comparative Examples 1 and 2: Manufacturing of electrolyte for lithium-sulfur secondary battery

Non-aqueous solvents were mixed in accordance with the composition shown in Table 1 below, and then lithium salt and additives were dissolved at the concentrations and contents shown in Table 1 to manufacture electrolytes for each Example and Comparative Example.

**[Table 1]**

| | Non-aqueous solvent (material name (vol%)) | | | Lithium salt | | Additive | |
|---|---|---|---|---|---|---|---|
| | Furan/tetrahydrofur an | Chain ether | Type | Type | Concentratio n (mol%) | Type | Conten t (wt. %) |
| Example 1 | 2-Methylfuran (2002) | DME(79.9 8) | | LiFSI | 0.417 | LiNO ³ | 1008 |
| Example 2 | 2-Methylfuran (1.45) & 2-methyltetrahydrofur an (1970) | DME(78.8 5) | | LiFSI | 0.666 | LiNO ³ | 0.901 |
| Example 3 | 2-Methylfuran (0.58) & 4-methyltetrahydrofur an (22.01) | DME(77.4 1) | | LiFSI | 0.643 | LiNO ³ | 0.813 |
| Example 4 | 2-Methylfuran (30.05) | DME(69.9 5) | | Li Triflat e | 0.332 | LiNO ³ | 0.99 |
| Comparativ e Example 1 | 2-Methylfuran (31.51) | DME(68.4 9) | | LiFSI | 0.998 | LiNO ³ | 4.999 |
| Comparativ e Example 2 | 2-Methylfuran (0.01) | DME(50.2 8) | 2-methoxy -1,3-dioxolan e (49.71) | LiFSI | 0.997 | LiNO ³ | 4.998 |
| Example 5 | 2-Methylfuran (14.8) & 2-methyltetrahydrofur an (34.0) | DME(51.2) | | LiFSI | 0.25 | LiNO ³ | 1008 |
| Example 6 | 2-Methylfuran (30.0) | DME(70.0) | | Li Triflat e | 0.265 | LiNO ³ | 1001 |
| Example 7 | 2-Methylfuran (20.0) | DME (45.8) & diethylene glycol dimethyl ether (34.2) | | LiFSI | 0.25 | LiNO ³ | 1 |
| Example 8 | 2-Methylfuran (20.6) | DME (44.4) & triethylene glycol | | LiFSI | 0.25 | LiNO ³ | 1002 |
| | | dimethyl ether (35.0) | | | | | |

| | | | | | | | |
|---|---|---|---|---|---|---|---|
| * DME: 1,2- Dimethoxyethane; LiFSI: (SO₂F)₂NLi; Li Triflate: CF₃SO₃Li | | | | | | | |

### Test Example 1: Calculation of mixing energies at the time of mixing electrolyte and lithium sulfide or lithium polysulfide

Using the commercialized COSMOtherm software (COSMOlogic GmbH & Co. KG) based on the COSMO-RS theory, the mixing energy at the time of mixing the electrolytes of Examples or Comparative Examples and lithium polysulfide (Li₂Sₙ; n is 2, 4, 6, or 8) or lithium sulfide (Li₂S) was calculated at room temperature (25°C), and the calculation results are summarized in Table 2 below:

**[Table 2]**

| | Mixing energy by lithium sulfide or lithium polysulfide (kcal/mol) | | | | |
|---|---|---|---|---|---|
| | Li₂S | Li₂S₂ | Li₂S₄ | Li₂S₆ | Li₂S₈ |
| Example 1 | 7.061 | 3.293 | -0.388 | -1.233 | -1.505 |
| Example 2 | 7.286 | 3.441 | -0.491 | -1.416 | -1.668 |
| Example 3 | 7.366 | 3.438 | -0.59 | -1.513 | -1.769 |
| Example 4 | 6.488 | 3.153 | 0.009 | -0.862 | -1.105 |
| Comparative Example 1 | 3.775 | 1.279 | -0.991 | -1.661 | -1.72 |
| Comparative Example 2 | 3.455 | 0.663 | -1.644 | -2.107 | -2.169 |
| Example 5 | 8.470 | 4.140 | -0.360 | -1.430 | -1.640 |
| Example 6 | 8.530 | 4.120 | -0.180 | -1.260 | -1.450 |
| Example 7 | 8.620 | 3.830 | -0.730 | -1.710 | -1.840 |
| Example 8 | 8.620 | 3.800 | -0.700 | -1.650 | -1.760 |

Referring to Table 2, it was confirmed that the electrolytes of Examples 1 to 8 include a non-aqueous solvent of a specific composition, and contain a lithium salt and an additive at a certain concentration and content, the characteristics that the first mixing energy (Gmix1) for Li₂S₈ is -1.0 kcal/mol or less, and the second mixing energy (Gmix2) for Li₂S is 4.0 kcal/mol or more are satisfied.

On the other hand, it was confirmed that the electrolytes of Comparative Examples 1 and 2 contains a dioxolane-based compound such as 2-methoxy-1,3-dioxolane in a non-aqueous solvent, but the volume ratio of the furan-based compound or tetrahydrofuran-based compound and the chain ether-based compound is outside a certain range, and the concentration and content of the lithium salt and the additive become too large, thereby failing to satisfy the second mixing energy range.

### Test Example 2: Manufacturing of lithium-sulfur battery and evaluation of output power characteristic

### Electrolyte

The electrolytes of Examples or Comparative Examples were used.

### Manufacturing of cathode

95 parts by weight of a sulfur-carbon composite (S:C = 70:30 weight ratio) as a cathode active material (the individual sulfur content was set to 67.5% by weight based on the total weight of the cathode, and activated carbon with a pore volume of 1.8 cm³/g was used as the carbon material), and 5 parts by weight of styrene butadiene rubber/carboxymethyl cellulose (SBR : CMC = 7 : 3) as a binder were mixed to prepare a cathode slurry composition, and the prepared slurry composition was coated onto a current collector (Al foil), dried at 50°C for 12 hours, and pressed using a roll press machine to manufacture a cathode (at this time, the porosity of the electrode was set to 65%).

### Manufacturing of lithium-sulfur batteries

The cathode manufactured above and a lithium metal anode with a thickness of 150 *µ*m were positioned to face each other, a polyethylene (PE) separator was interposed between them, and then the electrolyte was injected to manufacture a coin cell type lithium-sulfur battery. On the other hand, in the production of the battery, the cathode was used by punching at 15 phi, and the polyethylene separator was used by punching at 19 phi, and the lithium metal at 16 phi.

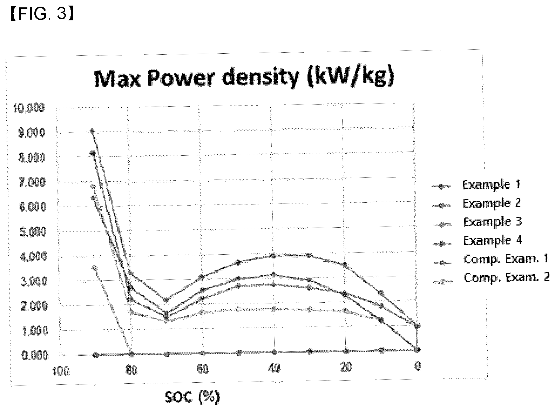

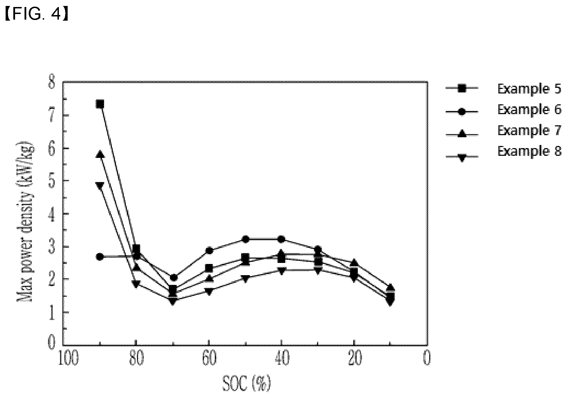

The resistance of the lithium-sulfur battery was measured through voltage drop through discharge at 5C for 10 seconds, through which the maximum power according to the state of charge (SOC) was converted. Such conversion results are shown in FIGS. 3 and 4, and the maximum power at SOC 70% is shown in Table 3 below.

**[Table 3]**

| | Output power @ SOC 70 (kW/kg) |
|---|---|
| Example 1 | 2.17 |
| Example 2 | 1.47 |
| Example 3 | 1.31 |
| Example 4 | 1.64 |
| Comparative Example 1 | About 0 (Substantially no output power due to overvoltage) |
| Comparative Example 2 | about 0 (Substantially no output power due to overvoltage) |
| Example 5 | 1.68 |
| Example 6 | 2.06 |
| Example 7 | 1.53 |
| Example 8 | 1.35 |

Referring to Table 3 and FIGS. 3 and 4, it was confirmed that the lithium-sulfur secondary batteries manufactured using the electrolytes of Examples exhibit excellent output power characteristic even at SOC 70%, where the greatest overvoltage is applied, and also exhibit high output power characteristic at the overall SOC.

On the other hand, it was confirmed that the lithium-sulfur secondary batteries of Comparative Examples could not substantially exhibit the output power due to excessive overvoltage at SOC 70%.

## Claims

1. An electrolyte for lithium-sulfur secondary battery comprising a lithium salt, a non-aqueous solvent and an additive,
wherein a first mixing energy(Gmix1) of the electrolyte and dilithio peroctasulfide (Li₂S₈) is -1.0 kcal/mol or less, and a second mixing energy(Gmix2) of the electrolyte and lithium sulfide (Li₂S) is 4.0 kcal/mol or more, which are calculated at room temperature (20±5°C) in accordance of the theory of COSMO-RS (Conductor like Screening Model for real Solvent).

2. The electrolyte for lithium-sulfur secondary battery according to claim 1, wherein the first mixing energy(Gmix1) is -2.50 kcal/mol to -1.05 kcal/mol, and the second mixing energy(Gmix2) is 5.50 kcal/mol to 9.00 kcal/mol.

3. The electrolyte for lithium-sulfur secondary battery according to claim 1, wherein the mixing energy of the electrolyte and lithium persulfide (Li₂S₂) is 1.5 kcal/mol or more, and has a value that is smaller than the second mixing energy (Gmix2) by 2.5 kcal/mol or more.

4. The electrolyte for lithium-sulfur secondary battery according to claim 1, wherein the mixing energy of the electrolyte and dilithio pertetrasulfide (Li₂S₄) or dilithio perhexasulfide (Li₂S₆) has a value that is larger than the first mixing energy (Gmix1) by 0.05 kcal/mol or more, and is 0.01 kcal/mol or less.

5. The electrolyte for lithium-sulfur secondary battery according to claim 1, wherein the non-aqueous solvent comprises a furan-based compound or a tetrahydrofuran-based compound and a chain ether-based compound in a volume ratio (v/v) of 1:1 to 1:5, and does not include a dioxolane-based compound.

6. The electrolyte for lithium-sulfur secondary battery according to claim 5, wherein the furan-based compound or the tetrahydrofuran-based compound comprises at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2-methyl tetrahydrofuran and 4-methyl tetrahydrofuran.

7. The electrolyte for lithium-sulfur secondary battery according to claim 5, wherein the chain ether-based compound comprises at least one selected from the group consisting of dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether.

8. The electrolyte for lithium-sulfur secondary battery according to claim 1, wherein the lithium salt is included at a concentration of 0.2 to 0.8 mol%.

9. The electrolyte for lithium-sulfur secondary battery according to claim 1, wherein the lithium salt comprises at least one selected from the group consisting of LiCl, LiBr, Lil, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi and (CF₃SO₂)₃CLi.

10. The electrolyte for lithium-sulfur secondary battery according to claim 1, wherein the additive is contained in an amount of 0.8 to 4.0% by weight.

11. The electrolyte for lithium-sulfur secondary battery according to claim 1, wherein the additive comprises at least one selected from the group consisting of lithium nitrate (LiNOs), potassium nitrate (KNOs), cesium nitrate (CsNOs), magnesium nitrate (Mg(NO₃)₂), barium nitrate (Ba(NO₃)₂), lithium nitrite (LiNO₂), potassium nitrite (KNO₂) and cesium nitrite (CsNO₂).

12. A lithium-sulfur secondary battery comprising:
a cathode containing sulfur as a cathode active material;
an anode containing metallic lithium;
a separator interposed between the cathode and the anode; and
the electrolyte of claim 1.

13. The lithium-sulfur secondary battery according to claim 12, wherein the cathode active material comprises elemental sulfur (S₈).

14. The lithium-sulfur secondary battery according to claim 12, wherein the cathode comprises a cathode active material and a binder.
